(19) Europäisches Patentamt

European Patent Office

Office européen des brevets

(11) **EP 0 956 531 B1**

(12) **EUROPÄISCHE PATENTSCHRIFT**

(45) Veröffentlichungstag und Bekanntmachung des Hinweises auf die Patenterteilung:
**11.12.2002   Patentblatt 2002/50**

(51) Int Cl.$^7$: **G06F 15/80**

(21) Anmeldenummer: **98909298.6**

(22) Anmeldetag: **29.01.1998**

(86) Internationale Anmeldenummer:
**PCT/DE98/00260**

(87) Internationale Veröffentlichungsnummer:
**WO 98/034176 (06.08.1998 Gazette 1998/31)**

(54) **VERFAHREN UND VORRICHTUNG ZUR TRANSFORMATION EINER ZUR NACHBILDUNG EINES TECHNISCHEN PROZESSES DIENENDEN FUZZY-LOGIK IN EIN NEURONALES NETZ**

METHOD AND DEVICE FOR TRANSFORMING A FUZZY LOGIC USED TO SIMULATE A TECHNICAL PROCESS INTO A NEURAL NETWORK

PROCEDE ET DISPOSITIF POUR LA TRANSFORMATION D'UNE LOGIQUE FLOUE SERVANT A LA SIMULATION D'UN PROCESSUS TECHNIQUE EN UN RESEAU NEURONAL

(84) Benannte Vertragsstaaten:
**DE FR GB IT**

(30) Priorität: **03.02.1997   DE 19703964**

(43) Veröffentlichungstag der Anmeldung:
**17.11.1999   Patentblatt 1999/46**

(73) Patentinhaber: SIEMENS AKTIENGESELLSCHAFT
**80333 München (DE)**

(72) Erfinder:
• **HOFFMANN, Wolfgang**
  **D-91052 Erlangen (DE)**
• **SCHWULERA, Erik**
  **D-91058 Erlangen (DE)**

(56) Entgegenhaltungen:
**WO-A-93/21598**

• LIN C -T ET AL: "A NEURAL FUZZY SYSTEM WITH FUZZY SUPERVISED LEARNING" IEEE TRANSACTIONS ON SYSTEMS, MAN AND CYBERNETICS. PART B: CYBERNETICS, Bd. 26, Nr. 5, Oktober 1996, Seiten 744-763, XP000626932
• VUORIMAA P ET AL: "A NEURO-FUZZY SYSTEM FOR CHEMICAL AGENT DETECTION" IEEE TRANSACTIONS ON FUZZY SYSTEMS, Bd. 3, Nr. 4, November 1995, Seiten 415-424, XP000538765

**Beschreibung**

Bei Neuro-Fuzzy-Systemen ist das Ein-Ausgangsverhalten von Fuzzy-Systemen unter der Verwendung neuronaler Netze optimierbar. Hiermit können die Nachteile von Fuzzy-Systemen und von neuronalen Netzen kompensiert werden. Eine Möglichkeit ein Fuzzy-System mittels eines neuronalen Netzes zu optimieren besteht darin, ein Fuzzy-System in ein neuronales Netz zu transformieren und dieses mit Ein-Ausgabe-Meßwerten zu trainieren. Während im Fuzzy-System das Systemverhalten eines nachzubildenden technischen Prozesses einbringbar ist, ermöglicht die Transformation in ein neuronales Netz eine zusätzliche Optimierung unter Zuhilfenahme von Ein-Ausgabe-Meßwerten des nachzubildenden technischen Prozesses. Die Optimierung kann dabei durch Optimierungsalgorithmen automatisiert werden, welche mit dem Neuro-Fuzzy-System unter Zuhilfenahme eines Computer ausführbar sind.

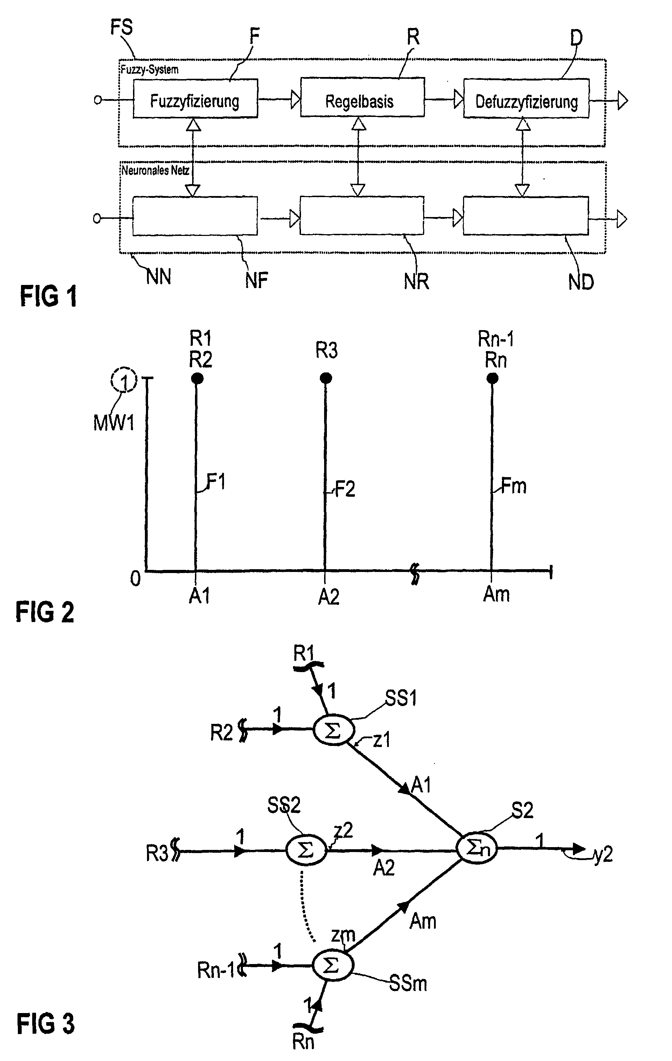

Für die Transformation der Komponenten eines Fuzzy-Systems in die Strukturen eines neuronalen Netzes sind verschiedene Verfahren bekannt. Ein Fuzzy-System weist insbesondere eine Fuzzy-Logik auf, welche in der Regel aus den drei Komponenten "Fuzzyfizierung", "Regelwerk" und "Defuzzyfizierung" besteht. Die drei Komponenten können jeweils unter Verwendung bestimmter Neuronentypen abgebildet werden. Der prinzipielle Aufbau eines Neuro-Fuzzy-Systems, d.h. die einzelnen Komponenten der Fuzzy-Logik innerhalb eines Neuro-Fuzzy-Netzes, sind in Figur 1 dargestellt. Bei der Transformation der Fuzzy-Logik FS in das neuronale Netz NN werden die Komponenten Fuzzyfizierung F, Regelbasis R und Defuzzyfizierung D im neuronalen Netz NN als neuronales Fuzzyfizierungsnetz NF, neuronales Regelbasisnetz NR und neuronales Defuzzyfizierungsnetz ND nachgebildet.

In der Fuzzy-Logik FS erfolgt insbesondere durch die Komponente Regelbasis R als Ergebnis von linguistischen Regeln die Ausgabe einer Anzahl linguistischer Werte an die Komponente Defuzzyfizierung D. Dabei liegt als Ergebnis einer linguistischen Regel jeweils ein linguistischer Wert vor. Die linguistischen Werte, welche bevorzugt als Strichfunktionen vorliegen, werden anschließend insbesondere in der Komponente Defuzzyfizierung D durch Defuzzyfizierung zu einem einzigen, "scharfen" Wert zusammengeführt.

In der Figur 2 sind beispielhaft derartige Strichfunktionen F1, F2..Fm dargestellt, welche in der Regel zunächst auf einen ersten Maximalwert MW1 der Größe 1 normiert sind. Den Strichfunktionen F1..Fm, welche auch als "Singletons" bezeichnet werden, ist jeweils eine Singletonposition A1, A2..Am und wenigstens ein Singleton-Gewichtungsfaktor R1, R2, R3..Rn-1, Rn zugeordnet.

Die Singletonpositionen A1..Am stellen dabei insbesondere das Ergebnis von in der Komponente Regelbasis R der Fuzzy-Logik FS vorliegenden Regeln dar. Dies entspricht insbesondere dem "DANN"-Teil von sogenannten linguistischen "WENN - DANN" Regeln, wie beispielsweise "WENN Druck hoch, DANN Explosionsgefahr groß". Die Singletonpositionen A1..Am liegen dabei in einem beliebigen Wertebereich.

Die Singleton-Gewichtungsfaktoren R1..Rn entsprechen insbesondere der Gewichtung des "DANN"-Teils einer linguistischen Regel der Komponente Regelbasis R der Fuzzy-Logik FS. Die Singleton-Gewichtungsfaktoren R1..Rn dienen dabei zur Gewichtung der Strichfunktionen F1..Fm, wobei einer Strichfunktion F1..Fm auch mehrere Singleton-Gewichtungsfaktoren R1..Rn zugeordnet sein können. Beispielsweise beziehen sich die Gewichtungsfaktoren der Regeln, "WENN Druck hoch, DANN Explosionsgefahr groß" und "WENN Temperatur hoch, DANN Explosionsgefahr groß" beide auf die gleiche Strichfunktion "Explosionsgefahr" mit Singletonposition "groß". Im Beispiel der Figur 2 sind die zwei Singleton-Gewichtungsfaktoren R1 und R2 der die Singletonposition A1 aufweisenden Strichfunktion F1 zugeordnet.

In der Komponente Defuzzyfizierung D der Fuzzy-Logik FS erfolgt durch Defuzzyfizierung die Zusammenführung der mit den Singleton-Gewichtungsfaktoren R1..Rn gewichteten Singletonpositionen A1..Am der Strichfunktionen F1..Fm zu einem einzigen Wert y. Dies erfolgt beispielsweise über die sogenannte Höhenmethode:

$$Y = \frac{\sum_{\upsilon=1}^{n} R\upsilon \cdot A(\upsilon)}{\sum_{\upsilon=1}^{n} R\upsilon} = \frac{y1}{\sum_{\upsilon=1}^{n} R\upsilon}$$

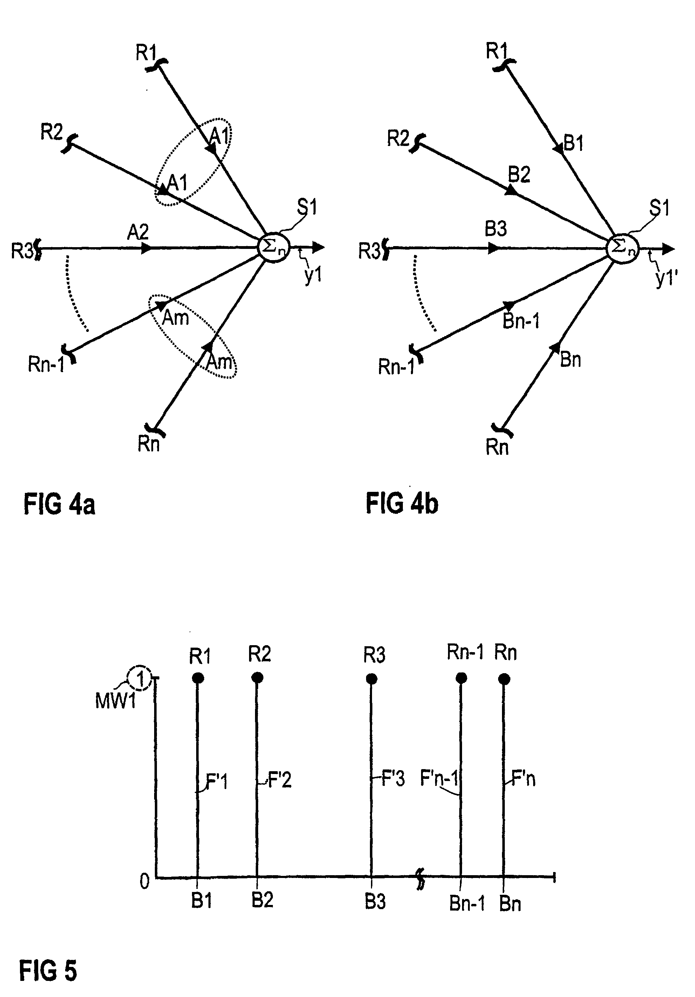

In der Figur 4a ist beispielsweise eine übliche Nachbildung der Fuzzy-Logik FS im neuronalen Netz NN dargestellt. Über ein Summenneuron S1 wird aus den mit den Singleton-Gewichtungsfaktoren R1..Rn gewichteten Singletonpositionen A1..Am durch Summenbildung ein Ausgangssignal y1 gebildet. Dabei ist jedem Gewichtungsfaktor R1..Rn zur Gewichtung die entsprechende Singletonposition A1..Am zugeordnet:

$$y1 = (R1 \cdot A1) + (R2 \cdot A1) + (R3 \cdot A2)+...+(Rn \cdot Am)$$

Nachteilig ist bei diesem Transformationsverfahren, daß jedem zur Summenbildung durch das Summenneuron S1 jeweils eine Singletonposition A1..Am zugeordnet ist. Während in der Fuzzy-Logik FS ein Freiheitsgrad von m Singletonpositionen A1..Am vorliegt, weist das neuronale Netz NN den in der Regel sehr viel höheren Freiheitsgrad n der Singleton-Gewichtungsfaktoren R1..Rn auf.

In der Figur 4b ist dargestellt, wie beim anschließend an die Transformation erfolgenden Trainieren des neuronalen Netzes NN die Singletonpositionen A1..Am der Gewichtungsfaktoren R1..Rn optimiert werden. Dabei werden die Werte der einzelnen Singletonpositionen A1..Am variiert. Gegenüber einer Anzahl m Singletonpositionen A1..Am vor der Optimierung, liegen dadurch nach der Optimierung die Anzahl n>=m optimierter Singletonpositionen Bl..Bn vor. Das optimierte neuronale Netz NN weist zur Bildung des Ausgangssignals yl' somit einen in der Regel gegenüber vor der Optimierung höheren Freiheitsgrad n auf.

In der Figur 5 sind die durch Rücktransformation des neuronalen Netzes NN in ein optimiertes Fuzzy-System FS bewirkten rücktransformierten Strichfunktionen F'1..F'n dargestellt. Während vor der Transformation eine Anzahl m Strichfunktionen F1..Fm vorliegen, weist das Fuzzy-System FS nach der Rücktransformation nun unvorteilhaft die in der Regel in einer größeren Anzahl vorliegenden n>=m Strichfunktionen F'1..F'n auf.

Nachteilig ist es, daß dies beispielsweise zur Folge haben kann, daß ein derartiges Neuro-Fuzzy-System nach der Optimierung nicht mehr auf einer standardisierten, handelsüblichen Fuzzy-System-Software realisierbar ist, welche nur einen bestimmten maximalen Freiheitsgrad zuläßt, d.h. nur eine maximale Anzahl an Singletonpositionen bzw. Strichfunktionen verarbeiten kann.

Aufgabe der Erfindung ist es somit ein verbessertes Verfahren zur Transformation einer Fuzzy-Logik in ein neuronales Netz anzugeben.

Die Aufgabe wird gelöst mit dem im Anspruch 1 angegebenen Verfahren und den in den Unteransprüchen angegebenen Vorrichtungen zur Durchführung des Verfahrens. Weitere vorteilhafte Ausführungsformen der Erfindung sind in den Unteransprüchen angegeben.

Vorteil des erfindungsgemäßen Verfahrens ist es, daß eine Fuzzy-Logik insbesondere komponentenweise in ein neuronales Netz trans formierbar ist und dieses dann gesamtheitlich, d.h. alle Komponenten zusammen optimierbar ist. Somit können zusätzlich zu dem in der Fuzzy-Logik berücksichtigbaren Systemverhalten, wie beispielsweise die Anzahl der zu verwendenden Zugehörigkeitsfunktionen, Meßdaten des nachzubildenden technischen Prozesses im Optimierungsverfahren des neuronalen Netzes eingebracht werden.

Das erfindungsgemäße Verfahren zur Transformation einer, zur Nachbildung eines technischen Prozesses dienenden Fuzzy-Logik in ein neuronales Netz hat den weiteren Vorteil, daß durch die Optimierung des neuronalen Netzes und durch die entsprechende Rücktransformation der Freiheitsgrad der Fuzzy-Logik unverändert bleibt. Insbesondere bleibt die Anzahl der in der Komponente Defuzzyfizierung der Fuzzy-Logik vorliegenden Strichfunktionen, bzw. "Singletons" vorteilhaft unverändert. Vorteilhaft ist es, daß auf Grund des ertindungsgemäßen Transformationsverfahrens die Singletonpositionen A1..Am im neuronalen Netz bei dessen Optimierung nur so variierbar sind, daß deren Anzahl konstant bleibt und somit in jedem Fall eine anschließende Rücktransformation des neuronalen Netzes in eine optimierte Fuzzy-Logik erfolgen kann. Dadurch wird vorteilhaft die Verwendung von insbesondere standardisierter Fuzzy-System-Software zur Beschreibung der optimierten Fuzzy-Logik ermöglicht.

Die Erfindung wird anhand der nachfolgend kurz angeführten und oben zum Teil bereits beschriebenen Figuren erläutert. Dabei zeigt:

FIG 1    beispielhaft die einzelnen Komponenten einer Fuzzy-Logik und des dazugehörigen neuronalen Netzes eines Neuro-Fuzzy-Systems,

FIG 2    beispielhaft Strichfunktionen der Fuzzy-Logik, welchen jeweils eine Singletonposition und wenigstens ein Singleton-Gewichtungsfaktor zugeordnet ist,

FIG 3    beispielhaft einen Ablaufplan des erfindungsgemäßen Transformationsverfahrens im neuronalen Netz mittels Nebenneuronen und Hauptneuronen,

FIG 4a   beispielhaft den Ablaufplan eines herkömmlichen Transformationsverfahrens im neuronalen Netz vor dessen Optimierung,

FIG 4b   beispielhaft den Ablaufplan aus Figur 4a nach der Optimierung des neuronalen Netzes durch Variation der einzelnen Singletonpositionen, und

FIG 5    beispielhaft Strichfunktionen einer Fuzzy-Logik, welche mittels eines herkömmlichen Verfahrens in ein neuronales Netz transformiert, optimiert und anschließend wieder rücktransformiert wurde.

Im Ablaufplan der Figur 3 ist das erfindungsgemäße Verfahren zur Transformation einer, zur Nachbildung eines technischen Prozesses dienenden Fuzzy-Logik FS in ein Neuronales Netz NN dargestellt. Im neuronalen Netz NN sind zur Bildung eines defuzzyfizierten Ausgangswertes y2 aus in der Figur 2 dargestellten, normierten Strichfunktionen F1..Fm diesen jeweils eine Singletonposition A1..Am und wenigstens ein Singleton-Gewichtungsfaktor R1..Rn zugeordnet. Die Anzahl der Strichfunktionen F1..Fm bzw. der Singletonpositionen A1..Am übersteigt somit nicht die Anzahl der Singleton-Gewichtungsfaktoren R1..Rn. Wie in der Figur 3 dargestellt ist, werden desweiteren zur Bildung des Ausgangswertes y2 zunächst diejenigen Singleton-Gewichtungsfaktoren R1..Rn additiv verknüpft, welche der gleichen Strichfunktion F1..Fm zugeordnet sind. Die Singleton-Gewichtungsfaktoren R1..Rn und die additiv verknüpften Singleton-Gewichtungsfaktoren R1..Rn werden über die entsprechenden Singletonpositionen A1..Am gewichtet und zur Bildung des defuzzyfizierten Ausgangswertes y2 additiv verknüpft. Insbesondere weist dabei das neuronale Netz NN als Komponente ein beispielhaft in der Figur 1 dargestelltes neuronales Defuzzifizierungsnetz NF zur Bildung eines defuzzyfizierten Ausgangswertes y2 aus den Strichfunktionen F1..Fm auf.

Gemäß der Erfindung werden somit zunächst diejenigen Singleton-Gewichtungsfaktoren R1..Rn zusammengefaßt, welche der gleichen Singletonposition A1..Am zugeordnet sind. Dann werden diejenigen Singleton-Gewichtungsfaktoren R1..Rn, welche lediglich einer einzigen Singletonposition A1..Am zugeordnet sind und die bereits zusammengefaßten Singleton-Gewichtungsfaktoren R1..Rn mit der entsprechenden Singletonposition A1..Am gewichtet und zur Bildung des Ausgangswertes y2 additiv verknüpft. Im Beispiel der auf Figur 2 bezogenen Figur 3 wird der Ausgangswert y2 somit gebildet durch:

$$y2 = (R\,1 + R\,2) \cdot A\,1 + (R\,3) \cdot A\,2 + ... + (Rn\,\text{-}1 + Rn) \cdot Am$$

In einer ebenfalls mit Bezug auf Figur 2 und in Figur 3 dargestellten weiteren vorteilhaften Ausführungsform des erfindungsgemäßen Verfahrens ist den Strichfunktionen F1..Fm jeweils ein Nebenneuron SS1..SSm zugeordnet. Die den Strichfunktionen F1..Fm zugeordneten Singleton-Gewichtungsfaktoren R1..Rn sind somit den entsprechenden Nebenneuronen SS1..SSm zugeordnet. Desweiteren werden diejenigen Singleton-Gewichtungsfaktoren R1..Rn, welche der gleichen Strichfunktion F1..Fm d.h. dem gleichen Nebenneuron SS1..SSm zugeordnet sind, jeweils über das entsprechende Nebenneuron SS1..SSm additiv verknüpft. Gemäß der Erfindung weisen die Nebenneuronen SS1..SSm jeweils insbesondere ein Ausgangssignal z1..zm auf, wobei die Singletonpositionen A1..Am zur Gewichtung der entsprechenden Ausgangssignale z1..zm der Nebenneuronen SS1..SSm dienen. Über ein Hauptneuron S2 werden die gewichteten Ausgangssignale z1..zm der Nebenneuronen SS1..SSm zur Bildung des defuzzyfizierten Ausgangswertes y2 additiv verknüpft.

Durch die gemäß der Erfindung zunächst erfolgende additive Verknüpfung derjenigen Singleton-Gewichtungsfaktoren R1..Rn, welche dem gleichen Nebenneuron SS1..SSm zugeordnet sind, bleibt die Anzahl m der beim Optimieren des neuronalen Netzes NN erfolgenden Optimierung der Singletonpositionen A1..Am vorteilhaft erhalten. Nach der Rücktransformation des optimierten neuronalen Netzes NN in eine somit optimierte Fuzzy-Logik FS weist diese die Anzahl m Strichfunktionen F1..Fm mit entsprechend optimierten Werten der Singletonpositionen A1..Am auf.

Vorteilhaft ist das erfindungsgemäße Verfahren mittels einer Vorrichtung durchführbar, wobei die in der Figur 3 dargetellten Nebenneuronen SS1..SSm und das Hauptneuron S2 Summier-Neuronen sind. Diese sind insbesondere mittels einer Hardwareschaltung, eines Softwareprogramms oder einer Kombination von Hardware und Software realisierbar.

**Patentansprüche**

1. Verfahren zur Transformation einer, zur Nachbildung eines technischen Prozesses dienenden Fuzzy-Logik (FS) in ein Neuronales Netz (NN), in welchem zur Bildung eines defuzzyfizierten Ausgangswertes (y2) aus normierten Strichfunktionen (F1..Fm)

   a) den Strichfunktionen (F1..Fm) jeweils eine Singletonposition (A1..Am) und wenigstens ein Singleton-Gewichtungsfaktor (R1..Rn) zugeordnet sind,

   b) diejenigen Singleton-Gewichtungsfaktoren (R1..Rn) additiv verknüpft werden, welche der gleichen Strichfunktion (F1..Fm) zugeordnet sind, und

   c) die Singleton-Gewichtungsfaktoren (R1..Rn) und die additiv verknüpften Singleton-Gewichtungsfaktoren (R1..Rn) über die entsprechenden Singletonpositionen (A1..Am) gewichtet und zur Bildung des defuzzyfizierten Ausgangswertes (y2) additiv verknüpft werden.

**2.** Verfahren nach Anspruch 1, wobei

a) den Strichfunktionen (F1..Fm) jeweils ein Nebenneuron (SS1..SSm) zugeordnet ist,

b) die Singleton-Gewichtungsfaktoren (R1..Rn), welche der gleichen Strichfunktion (F1..Fm) zugeordnet sind, über die entsprechenden Nebenneuronen (SS1..SSm) additiv verknüpft werden, und

c) die Singletonpositionen (A1..Am) zur Gewichtung der entsprechenden Ausgangssignale (z1..zm) der Nebenneuronen (SS1..SSm) dienen, welche über ein Hauptneuron (S2) zur Bildung des defuzzyfizierten Ausgangswertes (y2) additiv verknüpft werden.

**3.** Verfahren nach Anspruch 2, wobei die Nebenneuronen (SS1..SSm) und das Hauptneuron (S2) Summier-Neuronen sind.

**4.** Vorrichtung, die das Verfahren nach einem der Ansprüche 1 oder 2 ausführt, wobei das neuronale Netz (NN) als Komponente ein neuronales Defuzzifizierungsnetz (NF) zur Bildung des defuzzyfizierten Ausgangswertes (y2) aus den Strichfunktionen (F1..Fm) aufweist.

**5.** Vorrichtung nach Anspruch 4, wobei die Nebenneuronen (SS1..SSm) und das Hauptneuron (S2) Summier-Neuronen sind, die mittels einer Hardwareschaltung, eines Softwareprogramms oder einer Kombination von Hardware und Software realisiert sind.


**Revendications**

**1.** Procédé pour la transformation d'une logique floue (FS) servant à simuler un processus technique en un réseau neuronal (NN), dans lequel, pour former une valeur de sortie non floue (y2) à partir des fonctions barres normées (F1 à Fm)

a) on associe aux fonctions barres (F1 à Fm) à chaque fois une position de singleton (A1 à Am) et au moins un facteur de pondération de singleton (R1 à Rn),
b) on combine par addition ceux des facteurs de pondération de singletons (R1 à Rn) qui sont associés à la même fonction barre (F1 à Fm), et
c) on pondère les facteurs de pondération de singletons (R1 à Rn) et les facteurs de pondération de singletons combinés par addition (R1 à Rn) avec les positions de singletons correspondantes (A1 à Am) et on les combine par addition pour former la valeur de sortie non floue (y2).

**2.** Procédé selon la revendication 1, dans lequel

a) il est associé aux fonctions barres (F1 à Fm) à chaque fois un neurone auxiliaire (SS1 à SSm),
b) on combine par addition par l'intermédiaire des neurones auxiliaires correspondants (SS1 à SSm) ceux des facteurs de pondération de singletons (R1 à Rn) qui sont associés à la même fonction barre (F1 à Fm), et
c) les positions de singletons (A1 à Am) servent à pondérer les signaux de sortie correspondants (z1 à zm) des neurones auxiliaires (SS1 à SSm) qui sont combinés par addition par l'intermédiaire d'un neurone principal (S2) pour la formation de la valeur de sortie non floue (y2).

**3.** Procédé selon la revendication 2, dans lequel les neurones auxiliaires (SS1 à SSm) et le neurone principal (S2) sont des neurones d'addition.

**4.** Dispositif qui réalise le procédé selon l'une des revendications 1 ou 2, dans lequel le réseau neuronal (NN) comporte comme élément un réseau neuronal de mise sous forme non floue (NF) pour la formation de la valeur de sortie non floue (y2) à partir des fonctions barres (F1 à Fm).

**5.** Dispositif selon la revendication 4, dans lequel les neurones auxiliaires (SS1 à SSm) et le neurone principal (S2) sont des neurones d'addition qui sont réalisés au moyen d'un circuit matériel, d'un programme logiciel ou d'une combinaison de matériel et de logiciel.

**Claims**

1. Method for transformation of fuzzy logic (FS), which is used to simulate a technical process, into a neural network (NN), in which in order to form a defuzzified output value (y2) from normalised single-element functions (F1..Fm)

   a) the single-element functions (F1..Fm) are each assigned a singleton position (A1..Am) and at least one singleton weighting factor (R1..Rn),

   b) those singleton weighting factors (R1..Rn) which are assigned to the same single-element function (F1..Fm) are additively linked, and

   c) the singleton weighting factors (R1..Rn) and the additively linked singleton weighting factors (R1..Rn) are weighted with the corresponding singleton positions (A1..Am) and are additively linked to form the defuzzified output value (y2).

2. Method according to Claim 1, where

   a) a secondary neuron (SS1..SSm) is assigned to each of the single-element functions (F1..Fm),

   b) the singleton weighting factors (R1..Rn) which are assigned to the same single-element function (F1..Fm) are additively linked via the corresponding secondary neurons (SS1..SSm), and

   c) the singleton positions (A1..Am) are used for weighting the corresponding output signals (z1..zm) of the secondary neurons (SS1..SSm), which are additively linked via a main neuron (S2) to form the defuzzified output value (y2).

3. Method according to Claim 2, wherein the secondary neurons (SS1..SSm) and the main neuron (S2) are summing neurons.

4. Apparatus implementing the method according to one of Claims 1 or 2, wherein the neural network (NN) has, as a component, a neural defuzzification network (NF) to form the defuzzified output value (y2) from the single-element functions (F1..Fm).

5. Apparatus according to Claim 4, wherein the secondary neurons (SS1..SSm) and the main neuron (S2) are summing neurons which are implemented by means of a hardware circuit, a software program or a combination of hardware and software.

## FIG 1

Fuzzy-System

| Fuzzyfizierung | → | Regelbasis | → | Defuzzyfizierung | ⟹ |

Neuronales Netz

FS   F   R   D

NN   NF   NR   ND

## FIG 2

MW1

0

R1
R2        R3        Rn-1
Rn

F1        F2        Fm

A1        A2        Am

## FIG 3

R1

R2   1   Σ   SS1   z1

R3   1   Σ   SS2   z2   A1

A2   Σn   S2   1   y2

Rn-1   1   zm   Σ   Am

Rn   1   SSm

**FIG 4a**

**FIG 4b**

**FIG 5**